# EUROPEAN PATENT APPLICATION

(11) **EP 4 580 100 A1**
(43) Date of publication of application: **02.07.2025**
(21) Application number: 23845551.3
(22) Date of filing: 25.07.2023
(51) Int. Cl.: H04L 5/00

(54) **METHOD AND DEVICE FOR USE IN WIRELESS COMMUNICATION NODES**

(30) Priority: 27.07.2022 CN 202210894250
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/109132
(87) International publication number: WO 2024/022342

(57) **Abstract**

The present application discloses a method and device for use in wireless communication nodes. A first node receives first signaling and sends a first information block in a first time-frequency resource block. The first signaling is used for indicating the first time-frequency resource block. The first information block comprises an HARQ-ACK related to the first signaling. The first signaling is used for indicating a first reference signal resource. Starting from a first time, the first reference signal resource is used for determining only one of the spatial characteristic of a first-type physical channel in a first time-domain resource set and the spatial characteristic of a first-type physical channel in a second time-domain resource set. A time-domain resource occupied by the first time-frequency resource block is used for determining the first time. The first time-domain resource set and the second time-domain resource set are orthogonal to each other. The start time of the first time-domain resource set and the start time of the second time-domain resource set are not earlier than the first time.

## Description

### Technical Field

This application relates to a transmission method and apparatus in a wireless communication system, and in particular, to a transmission method and apparatus for wireless signals in a wireless communication system supporting a cellular network.

### Related Art

In New Radio (NR) Release (R) 15 and R16, a control channel and a data channel adopt different beam management/indication mechanisms, and Up Link (UL) and Down Link (DL) also adopt different beam management/indication mechanisms. However, in many cases, the control channel and the data channel may adopt a same beam, and in many application scenarios, there is channel reciprocity between UL and DL channels, so a same beam may be adopted. In NR R17, a technology of utilizing physical-layer signaling to update beams of the control channel and the data channel at the same time has been adopted.

In an existing NR system, spectrum resources are statically classified into a frequency division duplex (FDD) spectrum and a time division duplex (TDD) spectrum. However, for the TDD spectrum, both a base station and a User Equipment (UE) operate in a half-duplex mode. The half-duplex mode prevents self-interference and can reduce an influence of cross link interference, but also leads to a decrease in resource utilization and an increase in latency. In view of these problems, supporting a flexible duplex mode on the TDD spectrum or the FDD spectrum becomes a possible solution. The 3rd Generation Partner Project (3GPP) Radio Access Network (RAN) 1 #103e meeting agreed on research on the duplex technology, in which subband non-overlapping full duplex was proposed, i.e., a communication device performs transmission and reception operations on two subbands simultaneously.

### SUMMARY

The inventor has found through researches how to determine a spatial characteristic (such as a Quasi-Co-Located (QCL) parameter, spatial filter, a beam, or an antenna) of a physical channel is a key problem in a communication system based on beam transmission.

In view of the foregoing problems, this application discloses a solution. It should be noted that in the description of this application, the flexible duplex mode is used only as a typical application scenario or example. This application is also applicable to other scenarios facing similar problems (e.g., a scenario in which a link direction changes, or another scenario in which a multi-level configuration transmission direction is supported, or a base station or a UE having a stronger capability such as a scenario in which co-frequency full duplex is supported, or different application scenarios such as Enhanced Mobile Broadband (eMBB) and Ultra-Reliable Low-Latency Communication (URLLC)), and may also achieve a similar technical effect. In addition, using a unified solution for different scenarios (including, but not limited to, eMBB and URLLC scenarios) further helps to reduce hardware complexity and costs. In the absence of conflict, an embodiment of any node in this application and a feature in the embodiment may be applied to any other node, and vice versa. In the absence of conflict, embodiments of this application and features in the embodiments may be combined with each other arbitrarily.

As an embodiment, the terminology in this application is interpreted with reference to the definitions in the 3GPP TS36 series.

As an embodiment, the terminology in this application is interpreted with reference to the definitions in the 3GPP TS38 series.

As an embodiment, the terminology in this application is interpreted with reference to the definitions in the 3GPP TS37 series.

As an embodiment, the terminology in this application is interpreted with reference to the definitions in specification protocols of the Institute of Electrical and Electronics Engineers (IEEE).

This application discloses a method in a first node used for wireless communication, including:
receiving first signaling; and
transmitting a first information block in a first time-frequency resource block (RB);
where the first signaling is used for indicating the first time-frequency RB, and the first information block includes a Hybrid Automatic Repeat reQuest-ACKnowledge (HARQ-ACK) related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the problem to be resolved in this application includes: how to determine a spatial characteristic of a physical channel.

According to one aspect of this application, at least one symbol in the first time-domain resource set is configured as a first type, and any symbol in the second time-domain resource set is configured as a type other than the first type.

According to one aspect of this application, when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

According to one aspect of this application, the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

According to one aspect of this application, the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

According to one aspect of this application, the first signaling is used for indicating a target reference signal resource group, the target reference signal resource group including two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

According to one aspect of this application, the first-type physical channel is one of M types of physical channels, M being a positive integer greater than 1; and starting from the first moment, the first reference signal resource is used for determining a spatial characteristic of a target channel group, the target channel group including at least two types of physical channels in the M types of physical channels, and the first-type physical channel is one type of physical channel in the target channel group.

This application discloses a method in a second node used for wireless communication, including:
transmitting first signaling; and
receiving a first information block in a first time-frequency RB;
where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

According to one aspect of this application, at least one symbol in the first time-domain resource set is configured as a first type, and any symbol in the second time-domain resource set is configured as a type other than the first type.

According to one aspect of this application, when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

According to one aspect of this application, the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

According to one aspect of this application, the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

According to one aspect of this application, the first signaling is used for indicating a target reference signal resource group, the target reference signal resource group including two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

According to one aspect of this application, the first-type physical channel is one of M types of physical channels, M being a positive integer greater than 1; and starting from the first moment, the first reference signal resource is used for determining a spatial characteristic of a target channel group, the target channel group including at least two types of physical channels in the M types of physical channels, and the first-type physical channel is one type of physical channel in the target channel group.

This application discloses a first node device used for wireless communication, including:
a first receiver receiving first signaling; and
a first transmitter transmitting a first information block in a first time-frequency RB;
where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

This application discloses a second node device used for wireless communication, including:
a second transmitter transmitting first signaling; and
a second receiver receiving a first information block in a first time-frequency RB;
where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, compared with the conventional solution, this application has the following advantages:
- indication/update of spatial characteristics of a same type of physical channels in different time-domain resource sets is supported; and
- application scenarios of different time-domain resource sets may be different, such as different duplex modes, different interference environments, different antennas, and different spatial characteristics.

### BRIEF DESCRIPTION OF THE DRAWINGS

Other features, objectives, and advantages of this application will become more obvious by reading detailed descriptions of non-limiting embodiments with reference to the following accompanying drawings:
FIG. 1 is a flowchart of first signaling and a first information block according to an embodiment of this application;
FIG. 2 is a schematic diagram of a network architecture according to an embodiment of this application;
FIG. 3 is a schematic diagram of an embodiment of a wireless protocol architecture of a user plane and a control plane according to an embodiment of this application;
FIG. 4 is a schematic diagram of a first communication device and a second communication device according to an embodiment of this application;
FIG. 5 is a flowchart of transmission according to an embodiment of this application;
FIG. 6 is a schematic diagram of a first time-domain resource set and a second time-domain resource set according to an embodiment of this application;
FIG. 7 is a schematic diagram of a first time-domain resource set and a second time-domain resource set according to another embodiment of this application;
FIG. 8 is a schematic diagram of a spatial characteristic of a first-type physical channel according to an embodiment of this application;
FIG. 9 is a schematic diagram of a spatial characteristic of a first-type physical channel according to another embodiment of this application;
FIG. 10 is a schematic diagram of determining whether a first reference signal resource corresponds to a first time-domain resource set or a second time-domain resource set according to an embodiment of this application;
FIG. 11 is a schematic diagram of determining whether a first reference signal resource corresponds to a first time-domain resource set or a second time-domain resource set according to another embodiment of this application;
FIG. 12 is a schematic diagram of determining whether a first reference signal resource corresponds to a first time-domain resource set or a second time-domain resource set according to another embodiment of this application;
FIG. 13 is a schematic diagram of a target channel group according to an embodiment of this application;
FIG. 14 is a structural block diagram of a processing apparatus used in a first node device according to an embodiment of this application; and
FIG. 15 is a structural block diagram of a processing apparatus used in a second node device according to an embodiment of this application.

### DETAILED DESCRIPTION

The technical solution of this application will be further described in detail below with reference to the accompanying drawings. It should be noted that, in the absence of conflict, embodiments of this application and features in the embodiments may be combined with each other arbitrarily.

### Embodiment 1

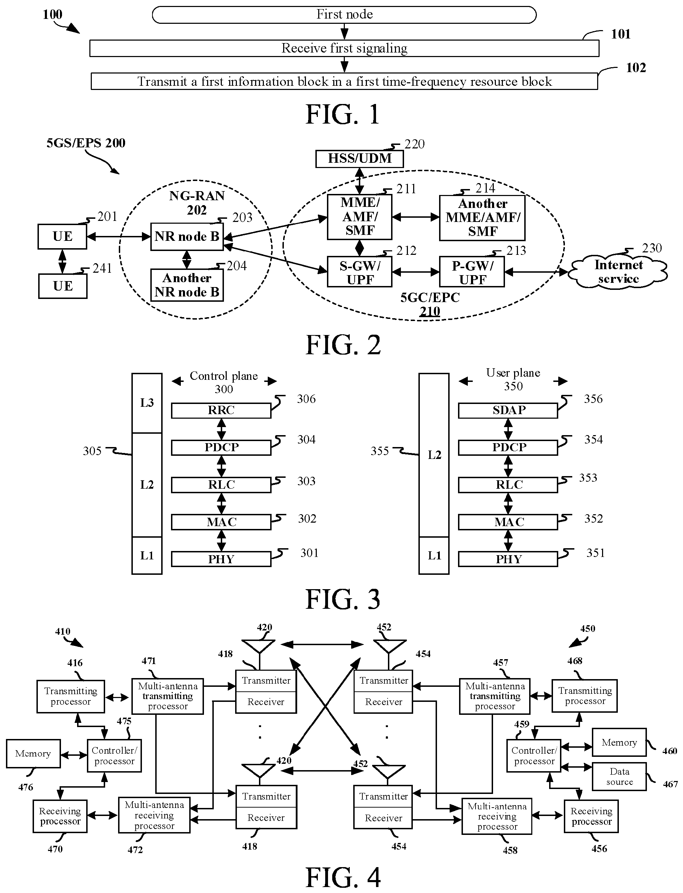

Embodiment 1 illustrates a flowchart of first signaling and a first information block according to an embodiment of this application, as shown in FIG. 1. In 100 shown in FIG. 1, each box represents a step.

In Embodiment 1, the first node in this application receives first signaling in step 101; and transmits a first information block in a first time-frequency RB in step 102; where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the first signaling is physical-layer signaling.

As an embodiment, the first signaling is Downlink Control Information (DCI) signaling.

As an embodiment, the first signaling is Sidelink Control Information (SCI) signaling.

As an embodiment, the first signaling is transmitted on a Physical Downlink Control Channel (PDCCH).

As an embodiment, the first signaling is transmitted on a Physical Sidelink Control CHannel (PSCCH).

As an embodiment, the first signaling is higher-layer signaling.

As an embodiment, the first signaling is Radio Resource Control (RRC) signaling.

As an embodiment, the first signaling is Medium Access Control Control Element (MAC CE) signaling.

As an embodiment, the first time-frequency resource block includes a Physical Uplink Control Channel (PUCCH) resource.

As an embodiment, the first time-frequency resource block includes a Physical Uplink Shared CHannel (PUSCH) resource.

As an embodiment, the first time-frequency resource block includes a Physical Sidelink Feedback CHannel (PSFCH) resource.

As an embodiment, the first time-frequency resource block includes at least one Resource Element (RE).

As an embodiment, the first time-frequency RB occupies at least one symbol in a time domain, and the first time-frequency RB occupies at least one RB in the time domain.

As an embodiment, the symbol is a single-carrier symbol.

As an embodiment, the symbol is a multi-carrier symbol.

As an embodiment, the symbol in this application is an Orthogonal Frequency Division Multiplexing (OFDM) symbol.

As an embodiment, the symbol in this application is a Single Carrier-Frequency Division Multiple Access (SC-FDMA) symbol.

As an embodiment, the symbol in this application is a Discrete Fourier Transform Spreading Orthogonal Frequency Division Multiplexing (DFT-s-OFDM) symbol.

As an embodiment, the symbol in this application is a Filter Bank Multi Carrier (FBMC) symbol.

As an embodiment, the symbol in this application includes a Cyclic Prefix (CP).

As an embodiment, the first signaling includes a second field, and the second field in the first signaling is used for indicating the first time-frequency RB; and the second field includes at least one bit.

As an embodiment, the first signaling includes a third field and a fourth field, the third field in the first signaling is used for indicating a time-domain resource occupied by the first time-frequency RB, and the fourth field in the first signaling is used for indicating a frequency-domain resource occupied by the first time-frequency RB; and the third field includes at least one bit, and the fourth field includes at least one bit.

As an embodiment, the occupied time-domain resource in this application is: one or more occupied moments.

As an embodiment, the occupied time-domain resource in this application is: one or more occupied symbols.

As an embodiment, the occupied frequency-domain resource in this application is: one or more occupied RBs.

As an embodiment, the occupied frequency-domain resource in this application is: one or more multi-carriers.

As an embodiment, the second field is a PUCCH resource indicator field.

As an embodiment, the third field is a time domain resource assignment field.

As an embodiment, the fourth field is a frequency domain resource assignment field.

As an embodiment, for a specific definition of the PDCCH resource indicator field, refer to 3GPP TS38.212, chapter 7.3.

As an embodiment, for a specific definition of the time domain resource indicator field, refer to 3GPP TS38.212, chapter 7.3.

As an embodiment, for a specific definition of the frequency domain resource indicator field, refer to 3GPP TS38.212, chapter 7.3.

As an embodiment, the first-type physical channel in the first time-domain resource set and the first-type physical channel in the second time-domain resource set belong to a same BandWidth Part (BWP).

As an embodiment, the first-type physical channel in the first time-domain resource set and the first-type physical channel in the second time-domain resource set belong to a same serving cell.

As an embodiment, the first-type physical channel in the first time-domain resource set and the first-type physical channel in the second time-domain resource set belong to a same serving cell set, and the same serving cell set includes at least one serving cell.

As an embodiment, the first-type physical channel includes a DL physical channel and a UL physical channel.

As an embodiment, the first-type physical channel includes at least one of a DL physical channel and a UL physical channel.

As an embodiment, the first-type physical channel includes a DL physical channel.

As a sub-embodiment of the foregoing embodiment, the first receiver monitors the first-type physical channel in the first time-domain resource set and monitors the first-type physical channel in the second time-domain resource set.

As a sub-embodiment of the foregoing embodiment, the first receiver receives third signaling; where the third signaling occupies one first-type physical channel, and a time-domain resource occupied by the third signaling belongs to the first time-domain resource set or the second time-domain resource set.

As a sub-embodiment of the foregoing embodiment, the first receiver receives third signaling and a third signal; where the third signaling is used for indicating a time-domain resource occupied by the third signal, the third signal occupies one first-type physical channel, and the time-domain resource occupied by the third signal belongs to the first time-domain resource set or the second time-domain resource set.

As a sub-embodiment of the foregoing embodiment, the first-type physical channel includes a DL physical channel.

As a sub-embodiment of the foregoing embodiment, the third signaling is DCI signaling.

As a sub-embodiment of the foregoing embodiment, the third signaling is higher-layer signaling.

As a sub-embodiment of the foregoing embodiment, the third signaling is RRC signaling.

As a sub-embodiment of the foregoing embodiment, the third signaling is MAC CE signaling.

As a sub-embodiment of the foregoing embodiment, the third signal includes Physical Downlink Shared CHannel (PDSCH) transmission.

As an embodiment, the DL physical channel includes a PDCCH.

As an embodiment, the DL physical channel includes a PDSCH.

As an embodiment, the DL physical channel includes a PDCCH and a PDSCH.

As an embodiment, the DL physical channel includes at least one of a PDCCH and a PDSCH.

As an embodiment, the first-type physical channel includes a UL physical channel.

As an embodiment, the first receiver receives second signaling, and the first transmitter transmits a second signal; where the second signaling is used for indicating a time-domain resource occupied by the second signal, the second signal occupies one first-type physical channel, and the time-domain resource occupied by the third signal belongs to the first time-domain resource set or the second time-domain resource set.

As a sub-embodiment of the foregoing embodiment, the first-type physical channel includes a UL physical channel.

As a sub-embodiment of the foregoing embodiment, the second signaling is DCI signaling.

As a sub-embodiment of the foregoing embodiment, the second signaling is higher-layer signaling.

As a sub-embodiment of the foregoing embodiment, the second signaling is RRC signaling.

As a sub-embodiment of the foregoing embodiment, the second signaling is MAC CE signaling.

As a sub-embodiment of the foregoing embodiment, the second signal includes PUSCH transmission.

As a sub-embodiment of the foregoing embodiment, the second signal includes PUCCH transmission.

As an embodiment, the UL physical channel includes a PUSCH.

As an embodiment, the UL physical channel includes a PUCCH.

As an embodiment, the UL physical channel includes a PUSCH and a PUCCH.

As an embodiment, the UL physical channel includes at least one of a PUSCH and a PUCCH.

As an embodiment, the first time-domain resource set occupies at least one symbol in the time domain, and the second time-domain resource set occupies at least one symbol in the time domain.

As an embodiment, the first time-domain resource set occupies at least one slot in the time domain, and the second time-domain resource set occupies at least one slot in the time domain.

As an embodiment, the first time-domain resource set occupies at least one subframe in the time domain, and the second time-domain resource set occupies at least one subframe in the time domain.

As an embodiment, the first-type physical channel includes a PDCCH, and at least one control channel candidate in the first time-domain resource set and at least one control channel candidate in the second time-domain resource set belong to a same Control Resource Set (CORESET).

As an embodiment, the first-type physical channel includes a PDCCH, and all control channel candidates in the first time-domain resource set and all control channel candidates in the second time-domain resource set belong to a same CORESET.

As an embodiment, the first-type physical channel includes a PDCCH, and at least one control channel candidate in the first time-domain resource set and at least one control channel candidate in the second time-domain resource set belong to a same CORESET pool.

As an embodiment, the first-type physical channel includes a PDCCH, and all control channel candidates in the first time-domain resource set and all control channel candidates in the second time-domain resource set belong to a same CORESET pool.

As an embodiment, the first-type physical channel includes a PDCCH, and at least one control channel candidate in the first time-domain resource set and at least one control channel candidate in the second time-domain resource set belong to a same search space.

As an embodiment, the first-type physical channel includes a PDCCH, and at least one control channel candidate in the first time-domain resource set and at least one control channel candidate in the second time-domain resource set belong to a same search space set.

As an embodiment, the first-type physical channel includes a PDCCH, and all control channel candidates in the first time-domain resource set and all control channel candidates in the second time-domain resource set belong to a same search space set.

As an embodiment, the first-type physical channel includes a PUCCH, and the first-type physical channel in the first time-domain resource set and the first-type physical channel in the second time-domain resource set correspond to a same PUCCH resource index.

As an embodiment, a sender of the first signaling simultaneously receives and transmits a wireless signal on at least one symbol in the first time-domain resource set, and the sender of the first signaling only receives a wireless signal or only transmits a wireless signal on at least one symbol in the second time-domain resource set.

As an embodiment, the first node simultaneously receives and transmits a wireless signal on at least one symbol in the first time-domain resource set, and the first node only receives a wireless signal or only transmits a wireless signal on at least one symbol in the second time-domain resource set.

As an embodiment, the first-type physical channel includes a PDSCH, and the first-type physical channel in the first time-domain resource set and the first-type physical channel in the second time-domain resource set respectively correspond to different TCI state sets.

As an embodiment, the first-type physical channel includes a PUSCH, and the first-type physical channel in the first time-domain resource set and the first-type physical channel in the second time-domain resource set respectively correspond to different Transmission Configuration Indication (TCI) state sets.

As an embodiment, the first-type physical channel includes a PUSCH, and the first-type physical channel in the first time-domain resource set and the first-type physical channel in the second time-domain resource set respectively correspond to different Sounding Reference Signal (SRS) resource sets.

### Embodiment 2

Embodiment 2 illustrates a schematic diagram of a network architecture according to an embodiment of this application, as shown in FIG. 2.

FIG. 2 illustrates a network architecture 200 of Long-Term Evolution (LTE), Long-Term Evolution Advanced (LTE-A), and future 5G systems. The network architecture 200 of the LTE, LTE-A, and future 5G systems is referred to as an evolved packet system (EPS) 200. A 5G NR or LTE network architecture 200 may be referred to as a 5G System (5GS)/EPS 200 or another suitable term. The 5GS/EPS 200 may include one or more UEs 201, a UE 241 performing Sidelink communication with the UE 201, a next generation radio access network (NG-RAN) 202, a 5G CoreNetwork (5GC)/an Evolved Packet Core (EPC) 210, a Home Subscriber Server (HSS)/Unified Data Management (UDM) 220, and an Internet service 230. The 5GS/EPS 200 may be interconnected to another access network, but for simplicity, these entities/interfaces are not shown. As shown in FIG. 2, the 5GS/EPS 200 provides a packet switching service. However, a person skilled in the art will easily understand that various concepts presented throughout this application may be extended to a network that provides a circuit switching service. The NG-RAN 202 includes an NR node B (gNB) 203 and another gNB 204. The gNB 203 provides termination of user and control plane protocols towards the UE 201. The gNB 203 may be connected to another gNB 204 by using an Xn interface (e.g., backhaul). The gNB 203 may alternatively be referred to as a base station, a base transceiver station, a radio base station, a radio transceiver, a transceiver function, a basic service set (BSS), an extended service set (ESS), a transmit-receive point (TRP), or another suitable term. The gNB 203 provides the UE 201 with an access point to the 5GC/EPC 210. An example of the UE 201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (e.g., an MP3 player), a camera, a game console, an unmanned aerial vehicle, an aircraft, a narrowband physical network device, a machine type communication device, a land vehicle, an automobile, a wearable device, or any other apparatuses having similar functions. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the 5GC/EPC 210 by using an S1/NG interface. The 5GC/EPC 210 includes a Mobility Management Entity (MM)/Authentication Management Field (AMF)/Session Management Function (SMF) 211, another MM/AMF/SMF 214, a Service Gateway (S-GW)/User Plane Function (UPF) 212, and a Packet Data Network Gateway (P-GW)/UPF 213. The MME/AMF/SMF 211 is a control node that processes signaling between the UE 201 and the 5GC/EPC 210. Generally, the MME/AMF/SMF 211 provides bearer and connection management. All user Internet Protocol (IP) packets are transmitted by using the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes IP services corresponding to operators, and may specifically include Internet, Intranet, an IP Multimedia Subsystem (IMS), and packet switching services.

As an embodiment, the first node in this application includes the UE 201.

As an embodiment, the first node in this application includes the UE 241.

As an embodiment, the second node in this application includes the gNB 203.

### Embodiment 3

Embodiment 3 illustrates a schematic diagram of an embodiment of a wireless protocol architecture of a user plane and a control plane according to an embodiment of this application, as shown in FIG. 3.

Embodiment 3 illustrates a schematic diagram of an embodiment of a wireless protocol architecture of a user plane and a control plane according to this application, as shown in FIG. 3. FIG. 3 is a schematic diagram of an embodiment of a radio protocol architecture for a user plane 350 and a control plane 300. In FIG. 3, a radio protocol architecture for the control plane 300 between a first communication node device (a UE, a gNB, or a Road Side Unit (RSU) in V2X) and a second communication node device (a gNB, a UE, or an RSU in V2X) or between two UEs is illustrated by using three layers: a layer 1, a layer 2, and a layer 3. The layer 1 (L1 layer) is the lowest layer and implements signal processing functions of various physical layers (PHYs). The L1 layer is referred to as a PHY 301 herein. The layer 2 (L2 layer) 305 is above the PHY 301, and is responsible for a link between the first communication node device and the second communication node device or between two UEs. The L2 layer 305 includes a Medium Access Control (MAC) sublayer 302, a Radio Link Control (RLC) sublayer 303, and a Packet Data Convergence Protocol (PDCP) sublayer 304, and these sublayers terminate at the second communication node device. The PDCP sublayer 304 provides multiplexing between different radio bearers and logical channels. The PDCP sublayer 304 further provides security by encrypting a data packet and provides support for handover of a first communication node device between second communication node devices. The RLC sublayer 303 provides segmentation and reassembling of an upper-layer data packet, retransmission of a lost data packet, and reordering of a data packet so as to compensate for disordered receiving caused by a hybrid automatic repeat request (HARQ). The MAC sublayer 302 provides multiplexing between a logical channel and a transport channel. The MAC sublayer 302 is further responsible for allocating various radio resources (e.g., RBs) in a cell between first communication node devices. The MAC sublayer 302 is further responsible for a HARQ operation. An RRC sublayer 306 in the layer 3 (L3 layer) in the control plane 300 is responsible for obtaining a radio resource (that is, a radio bearer) and configuring a lower layer by using RRC signaling between the second communication node device and the first communication node device. A radio protocol architecture of the user plane 350 includes a layer 1 (L1 layer) and a layer 2 (L2 layer). In the user plane 350, for a PHY 351, a PDCP sublayer 354 in an L2 layer 355, an RLC sublayer 353 in the L2 layer 355, and a MAC sublayer 352 in the L2 layer 355, a radio protocol architecture for the first communication node device and the second communication node device is substantially the same as that for the corresponding layers and sublayers in the control plane 300. However, the PDCP sublayer 354 further provides header compression for an upper-layer data packet to reduce radio transmission overhead. The L2 layer 355 in the user plane 350 further includes a Service Data Adaptation Protocol (SDAP) sublayer 356. The SDAP sublayer 356 is responsible for mapping between a Quality of Service (QoS) flow and a Data Radio Bearer (DRB), to support diversity of services. Although not shown in the figure, the first communication node device may have several upper layers above the L2 layer 355, including a network layer (e.g., an IP layer) terminated at a P-GW on a network side and an application layer terminated at the other end (such as a remote UE or a server) of the connection.

As an embodiment, the wireless protocol architecture in FIG. 3 is applicable to the first node in this application.

As an embodiment, the wireless protocol architecture in FIG. 3 is applicable to the second node in this application.

As an embodiment, the first signaling is generated in the RRC sublayer 306.

As an embodiment, the first signaling is generated in the MAC sublayer 302.

As an embodiment, the first signaling is generated in the MAC sublayer 352.

As an embodiment, the first signaling is generated in the PHY 301 or the PHY 351.

As an embodiment, the first information block is generated in the MAC sublayer 302.

As an embodiment, the first information block is generated in the MAC sublayer 352.

As an embodiment, the first information block is generated in the PHY 301 or the PHY 351.

As an embodiment, the first signal is generated in the PHY 301 or the PHY 351.

As an embodiment, the second signaling is generated in the RRC sublayer 306.

As an embodiment, the second signaling is generated in the MAC sublayer 302.

As an embodiment, the second signaling is generated in the MAC sublayer 352.

As an embodiment, the second signaling is generated in the PHY 301 or the PHY 351.

As an embodiment, the second signal is generated in the PHY 301 or the PHY 351.

As an embodiment, the third signaling is generated in the RRC sublayer 306.

As an embodiment, the third signaling is generated in the MAC sublayer 302.

As an embodiment, the third signaling is generated in the MAC sublayer 352.

As an embodiment, the third signaling is generated in the PHY 301 or the PHY 351.

As an embodiment, the third signal is generated in the PHY 301 or the PHY 351.

### Embodiment 4

Embodiment 4 illustrates a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

During transmission from the first communication device 410 to the second communication device 450, at the first communication device 410, an upper-layer data packet from the core network is provided to the controller/processor 475. The controller/processor 475 implements the functions of the L2 layer. In DL, the controller/processor 475 provides header compression, encryption, packet segmentation and reordering, multiplexing between a logical channel and a transport channel, and radio resource allocation of the second communication device 450 based on various priority metrics. The controller/processor 475 is further responsible for a HARQ operation, retransmission of a lost packet, and signaling to the second communication device 450. The transmitting processor 416 and the multi-antenna transmitting processor 471 implement various signal processing functions for the L1 layer (that is, the PHY). The transmitting processor 416 implements coding and interleaving to facilitate forward error correction (FEC) at the second communication device 450 and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital space precoding, including codebook-based precoding and non-codebook-based precoding, and beamforming processing on encoded and modulated symbols to generate one or more parallel streams. The transmitting processor 416 then maps each parallel stream to a subcarrier, multiplexes a modulated symbol with a reference signal (i.e., pilot frequency) in a time domain and/or a frequency domain, and then uses inverse fast Fourier transform (IFFT) to generate a physical channel carrying a time-domain multi-carrier symbol stream. Subsequently, the multi-antenna transmitting processor 471 performs a transmission analog precoding/beamforming operation on the time-domain multi-carrier symbol stream. Each transmitter 418 converts a baseband multi-carrier symbol stream provided by the multi-antenna transmitting processor 471 into a radio-frequency stream, which is later provided to different antennas 420.

During transmission from the first communication device 410 to the second communication device 450, at the second communication device 450, each receiver 454 receives a signal by using a corresponding antenna 452 thereof. Each receiver 454 recovers information modulated onto a radio-frequency carrier, and converts the radio-frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a reception analog precoding/beamforming operation on the baseband multi-carrier symbol stream provided by the receiver 454. The receiving processor 456 converts, by using fast Fourier transform (FFT), the baseband multi-carrier symbol stream, on which the reception analog precoding/beamforming operation is performed, from the time domain to the frequency domain. In the frequency domain, a PHY data signal and a reference signal are demultiplexed by the receiving processor 456, where the reference signal is used for channel estimation, and after multi-antenna detection in the multi-antenna receiving processor 458, the data signal restores any parallel stream using the second communication device 450 as a destination. A symbol in each parallel stream is demodulated and recovered in the receiving processor 456, and a soft decision is generated. Subsequently, the receiving processor 456 decodes and deinterleaves the soft decision to recover the upper-layer data and the control signal that are transmitted by the first communication device 410 on the physical channel. Then, the upper-layer data and the control signal are provided to the controller/processor 459. The controller/processor 459 implements the functions of the L2 layer. The controller/processor 459 may be associated with a memory 460 that stores program code and data. The memory 460 may be referred to as a computer-readable medium. In the DL, the controller/processor 459 provides demultiplexing between a transport channel and a logical channel, packet reassembling, decryption, header decompression, and control signal processing to recover the upper-layer data packet from the core network. The upper-layer packet is later provided to all protocol layers above the L2 layer. Various control signals may alternatively be provided to L3 for processing by L3. The controller/processor 459 is further responsible for performing, by using an acknowledge (ACK) protocol and/or a negative acknowledge (NACK) protocol, error detection, to support the HARQ operation.

During transmission from the second communication device 450 to the first communication device 410, at the second communication device 450, the upper-layer data packet is provided to the controller/processor 459 by using a data source 467. The data source 467 represents all protocol layers above the L2 layer. Similar to a transmitting function at the first communication device 410 described in the DL, the controller/processor 459 implements header compression and encryption, packet segmentation and reordering, and multiplexing between a logical channel and a transport channel based on radio resource allocation of the first communication device 410, and implements an L2 layer function for the user plane and the control plane. The controller/processor 459 is further responsible for a HARQ operation, retransmission of a lost packet, and signaling to the first communication device 410. The transmitting processor 468 performs modulation mapping and channel coding. The multi-antenna transmitting processor 457 performs digital multi-antenna space precoding, including codebook-based precoding and non-codebook-based precoding, and beamforming. Subsequently, the transmitting processor 468 modulates generated parallel streams into a multi-carrier/single-carrier symbol stream which is subjected to an analog precoding/beamforming operation in the multi-antenna transmitting processor 457 and then provided to different antennas 452 by using the transmitter 454. Each transmitter 454 first converts a baseband symbol stream provided by the multi-antenna transmitting processor 457 into a radio-frequency symbol stream which is then provided to the antenna 452.

During transmission from the second communication device 450 to the first communication device 410, the function at the first communication device 410 is similar to the receiving function at the second communication device 450 described during transmission from the first communication device 410 to the second communication device 450. Each receiver 418 receives a radio-frequency signal by using a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with a memory 476 that stores program code and data. The memory 476 may be referred to as a computer-readable medium. The controller/processor 475 provides demultiplexing between a transport channel and a logical channel, packet reassembling, decryption, header decompression, and control signal processing to recover the upper-layer data packet from the second communication device 450. The upper-layer data packet from the controller/processor 475 may be provided to the core network. The controller/processor 475 is further responsible for performing, by using an ACK protocol and/or a NACK protocol, error detection to support the HARQ operation.

As an embodiment, the second communication device 450 includes: at least one processor and at least one memory, the at least one memory including computer program code; and the at least one memory and the computer program code being configured to be used with the at least one processor. The second communication device 450 at least: receives first signaling; and transmits a first information block in a first time-frequency resource RB; where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the second communication device 450 includes: a memory storing a computer-readable instruction program, the computer-readable instruction program generating actions when being executed by at least one processor, the actions including: receiving first signaling; and transmitting a first information block in a first time-frequency RB; where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the first communication device 410 includes: at least one processor and at least one memory, the at least one memory including computer program code; and the at least one memory and the computer program code being configured to be used with the at least one processor. The first communication device 410 at least: transmits first signaling; and receives a first information block in a first time-frequency RB; where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the first communication device 410 includes: a memory storing a computer-readable instruction program, the computer-readable instruction program generating actions when being executed by at least one processor, the actions including: transmitting first signaling; and receiving a first information block in a first time-frequency RB; where the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the first node in this application includes the second communication device 450.

As an embodiment, the second node in this application includes the first communication device 410.

As an embodiment, at least one of {the antenna 452, the receiver 454, the receiving processor 456, the multi-antenna receiving processor 458, the controller/processor 459, the memory 460, and the data source 467} is configured to receive the first signaling in this application; and at least one of {the antenna 420, the transmitter 418, the transmitting processor 416, the multi-antenna transmitting processor 471, the controller/processor 475, and the memory 476} is configured to transmit the first signaling in this application.

As an embodiment, at least one of {the antenna 452, the receiver 454, the receiving processor 456, the multi-antenna receiving processor 458, the controller/processor 459, the memory 460, and the data source 467} is configured to receive the first signal in this application; and at least one of {the antenna 420, the transmitter 418, the transmitting processor 416, the multi-antenna transmitting processor 471, the controller/processor 475, and the memory 476} is configured to transmit the first signal in this application.

As an embodiment, at least one of {the antenna 452, the receiver 454, the receiving processor 456, the multi-antenna receiving processor 458, the controller/processor 459, the memory 460, and the data source 467} is configured to receive the second signaling in this application; and at least one of {the antenna 420, the transmitter 418, the transmitting processor 416, the multi-antenna transmitting processor 471, the controller/processor 475, and the memory 476} is configured to transmit the second signaling in this application.

As an embodiment, at least one of {the antenna 452, the receiver 454, the receiving processor 456, the multi-antenna receiving processor 458, the controller/processor 459, the memory 460, and the data source 467} is configured to receive the third signaling in this application; and at least one of {the antenna 420, the transmitter 418, the transmitting processor 416, the multi-antenna transmitting processor 471, the controller/processor 475, and the memory 476} is configured to transmit the third signaling in this application.

As an embodiment, at least one of {the antenna 452, the receiver 454, the receiving processor 456, the multi-antenna receiving processor 458, the controller/processor 459, the memory 460, and the data source 467} is configured to receive the third signal in this application; and at least one of {the antenna 420, the transmitter 418, the transmitting processor 416, the multi-antenna transmitting processor 471, the controller/processor 475, and the memory 476} is configured to transmit the third signal in this application.

As an embodiment, at least one of {the antenna 452, the transmitter 454, the transmitting processor 468, the multi-antenna transmitting processor 457, the controller/processor 459, and the memory 460} is configured to transmit the first information block in the first time-frequency RB in this application; and at least one of {the antenna 420, the receiver 418, the receiving processor 470, the multi-antenna receiving processor 472, the controller/processor 475, and the memory 476} is configured to transmit the first information block in the first time-frequency RB in this application.

As an embodiment, at least one of {the antenna 452, the transmitter 454, the transmitting processor 468, the multi-antenna transmitting processor 457, the controller/processor 459, and the memory 460} is configured to transmit the second signal in this application; and at least one of {the antenna 420, the receiver 418, the receiving processor 470, the multi-antenna receiving processor 472, the controller/processor 475, and the memory 476} is configured to receive the second signal in this application.

### Embodiment 5

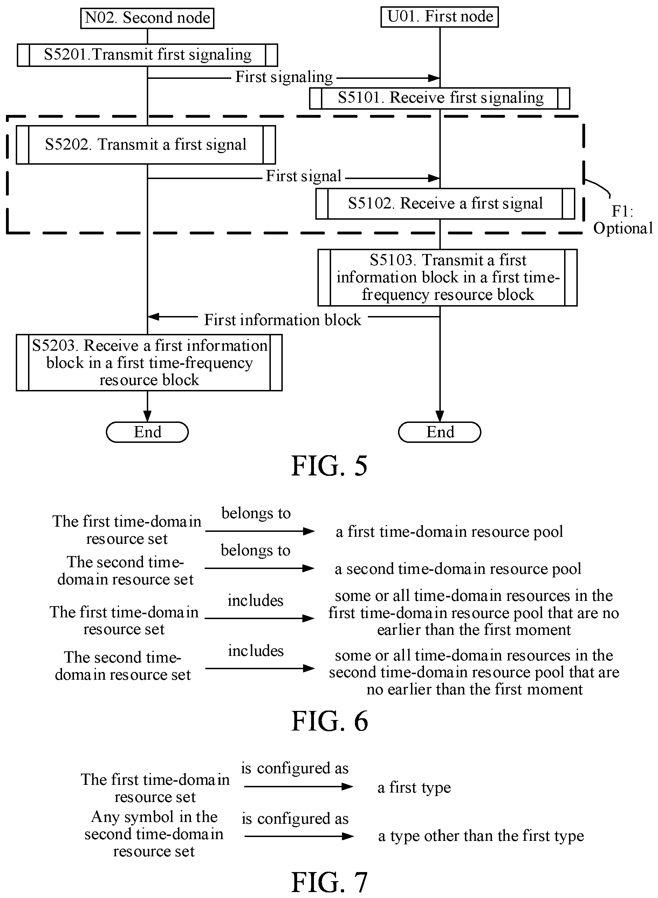

Embodiment 5 illustrates a flowchart of wireless transmission according to an embodiment of this application, as shown in FIG. 5. In FIG. 5, a first node U01 and a second node N02 are respectively two communication nodes performing transmission by using an air interface, and a step in a box F1 is optional.

**The first node U01** receives first signaling in step S5101; receives a first signal in step S5102; and transmits a first information block in a first time-frequency RB in step S5103.

**The second node N02** transmits first signaling in step S5201; transmits a first signal in step S5202; and receives a first information block in a first time-frequency RB in step S5203.

In Embodiment 5, the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, the first information block includes control information.

As an embodiment, the first information block includes Uplink Control Information (UCI).

As an embodiment, the first information block includes only HARQ-ACK related to the first signaling.

As an embodiment, the first information block further includes information other than the HARQ-ACK related to the first signaling.

As an embodiment, the HARQ-ACK related to the first signaling is ACK.

As an embodiment, the HARQ-ACK related to the first signaling indicates that the first signaling is correctly received, or the first signaling is used for scheduling the first signal, and the HARQ-ACK related to the first signaling indicates that the first signal is correctly received.

As an embodiment, the HARQ-ACK related to the first signaling is ACK or NACK.

As an embodiment, the HARQ-ACK related to the first signaling indicates that the first signaling is correctly received, or the first signaling is used for scheduling the first signal, and the HARQ-ACK related to the first signaling indicates whether the first signal is correctly received.

As an embodiment, when the first signaling does not carry a DL assignment, the HARQ-ACK related to the first signaling is HARQ-ACK corresponding to the first signaling. When the first signaling schedules a PDSCH, the HARQ-ACK related to the first signaling is HARQ-ACK correspondingly scheduled by the first signaling.

As an embodiment, when the first signaling does not schedule the PDSCH, the HARQ-ACK related to the first signaling is HARQ-ACK corresponding to the first signaling. When the first signaling schedules the PDSCH, the HARQ-ACK related to the first signaling is an HARQ-ACK correspondingly scheduled by the first signaling.

As an embodiment, the first receiver receives a first signal; where the first signaling is used for scheduling the first signal, and the HARQ-ACK related to the first signaling is HARQ-ACK corresponding to the first signal.

As an embodiment, the second transmitter transmits a first signal; where the first signaling is used for scheduling the first signal, and the HARQ-ACK related to the first signaling is HARQ-ACK corresponding to the first signal.

As an embodiment, the first signal includes PDSCH transmission.

As an embodiment, the first signal includes Physical Sidelink Shared CHannel (PSSCH) transmission.

As an embodiment, the first signal carries a Transport Block (TB).

As an embodiment, scheduling information of the first signal includes at least one of an occupied time-domain resource, an occupied frequency-domain resource, a Modulation and Coding Scheme (MSC), an antenna port, a HARQ process number, a Redundancy Version (Rf), a New Data Indicator (NDI), and a TCI state.

As an embodiment, the HARQ-ACK related to the first signaling indicates that the first signal is correctly received.

As an embodiment, the HARQ-ACK related to the first signaling indicates whether the first signal is correctly received.

As an embodiment, a TCI state indicates a quasi co-location relationship.

As an embodiment, a TCI state includes one or more reference signal resources.

As an embodiment, a TCI state includes at least one reference signal resource.

As an embodiment, any reference signal resource included in a TCI state is one of an SRS resource, a Channel State Information Reference Signal (CSI-RS) resource, and a Synchronization Signal/Physical Broadcast Channel (SS/PBCH) block resource.

As an embodiment, any reference signal resource included in a TCI state is a CSI-RS resource or an SS/PBCH block resource.

As an embodiment, a TCI state includes at least one reference signal resource and a QCL parameter corresponding to each reference signal resource.

As an embodiment, a TCI state includes at least one reference signal resource and a type of a QCL parameter corresponding to each reference signal resource.

As an embodiment, the type of the QCL parameter includes TypeA, TypeB, TypeC, and TypeD.

As an embodiment, the QCL parameter whose type is TypeA includes Doppler shift, Doppler spread, average delay, and delay spread.

As an embodiment, the QCL parameter whose type is TypeB includes Dopler shift and Dopler spread.

As an embodiment, the QCL parameter whose type is TypeC includes Dopler shift and average delay.

As an embodiment, the QCL parameter whose type is TypeD includes a Spatial Rx parameter.

As an embodiment, for specific definitions of the TypeA, the TypeB, the TypeC, and the TypeD, refer to 3GPP TS38.214, chapter 5.1.5.

As an embodiment, the QCL parameter includes one or more of delay spread, Doppler spread, Doppler shift, average delay, and a Spatial Rx parameter.

As an embodiment, the QCL parameter includes Dopler shift and Dopler spread.

As an embodiment, the QCL parameter includes Dopler shift and average delay.

As an embodiment, the QCL parameter includes a Spatial Rx parameter.

As an embodiment, the QCL parameter includes at least one of a Spatial Tx parameter and a Spatial Rx parameter.

As an embodiment, the QCL parameter includes a spatial domain receive filter.

As an embodiment, the QCL parameter includes a spatial domain filter.

As an embodiment, the QCL parameter includes at least one of a spatial domain transmit filter and a spatial domain receive filter.

As an embodiment, the first reference signal resource is a UL reference signal resource.

As an embodiment, the first reference signal resource is a DL reference signal resource.

As an embodiment, the first reference signal resource includes at least one of an SRS resource, a CSI-RS resource, and an SS/PBCH block resource.

As an embodiment, the first reference signal resource includes at least one of a CSI-RS resource and an SS/PBCH block resource.

As an embodiment, the first signaling is used for indicating a first TCI state, and the first reference signal resource is a reference signal resource included in the first TCI state.

As an embodiment, the first signaling is used for indicating a first TCI state, the first reference signal resource is a reference signal resource included in the first TCI state, and the first reference signal resource corresponds to the QCL parameter whose type is the TypeD.

As an embodiment, the first signaling is used for indicating a first TCI state, the first reference signal resource is a reference signal resource included in the first TCI state, and the QCL parameter corresponding to the first reference signal resource includes a Spatial Rx parameter.

As an embodiment, the first signaling is used for indicating a first TCI state, the first reference signal resource is a reference signal resource included in the first TCI state, and the QCL parameter corresponding to the first reference signal resource includes a Spatial Rx parameter or a spatial domain filter.

As an embodiment, the first signaling explicitly indicates the first reference signal resource.

As an embodiment, the first signaling implicitly indicates the first reference signal resource.

As an embodiment, the first signaling is used for indicating a first TCI state group, the first TCI state group includes at least one TCI state, and the first TCI state is a TCI state in the first TCI state group.

As a sub-embodiment of the foregoing embodiment, at least one field in the first signaling is used for indicating the first TCI state group; and one field includes at least one bit.

As a sub-embodiment of the foregoing embodiment, the at least one field in the first signaling includes a first field, and the first field in the first signaling is used for indicating the first TCI state; and the first field includes at least one bit.

As a sub-embodiment of the foregoing embodiment, the first signaling includes a first field, and the first field in the first signaling is used for indicating the first TCI state group; and the first field includes at least one bit.

As a sub-embodiment of the foregoing embodiment, the first signaling includes a plurality of fields, the plurality of fields in the first signaling are jointly used for indicating the first TCI state group, a first field is one of the plurality of fields, and the first field in the first signaling is used for indicating the first TCI state; and one field includes at least one bit.

As an embodiment, the first signaling includes a first field, the first field in the first signaling is used for indicating the first reference signal resource, and the first field includes at least one bit.

As an embodiment, the first signaling includes a first field, the first field in the first signaling is used for indicating a first TCI state, the first reference signal resource is a reference signal resource included in the first TCI state, and the first field includes at least one bit.

As an embodiment, a name of the first field includes Transmission Configuration Indication.

As an embodiment, the name of the first field includes TCI.

As an embodiment, the name of the first field includes SRS.

As an embodiment, the name of the first field includes beam.

As an embodiment, the first field is a Transmission Configuration Indication field.

As an embodiment, for a specific definition of the Transmission Configuration Indication field, refer to 3GPP TS38.212, chapter 7.3.

As an embodiment, the first field includes N codepoints, N1 codepoints in the N codepoints respectively correspond to N1 TCI state groups, N is a positive integer greater than 1, and N1 is a positive integer no greater than N.

As a sub-embodiment of the foregoing embodiment, quantities of TCI states respectively included in the N1 TCI state groups are all equal to 1.

As a sub-embodiment of the foregoing embodiment, any TCI state group included in the N1 TCI state groups includes one or more TCI states.

As a sub-embodiment of the foregoing embodiment, a quantity of bits included in the first field is a minimum integer no less than "logarithm base 2 of N1".

As a sub-embodiment of the foregoing embodiment, a quantity of bits included in the first field is "logarithm base 2 of N".

As a sub-embodiment of the foregoing embodiment, any codepoint of the first field is a non-negative integer.

As a sub-embodiment of the foregoing embodiment, any codepoint of the first field is a sequence.

As a sub-embodiment of the foregoing embodiment, any codepoint of the first field is a bit sequence.

As a sub-embodiment of the foregoing embodiment, any codepoint of the first field corresponds to a value in a value range of the first field.

As a sub-embodiment of the foregoing embodiment, any codepoint of the first field is a value in a value range of the first field.

As a sub-embodiment of the foregoing embodiment, any codepoint of the first field is a sequence including a value of each bit included in the first field.

As a sub-embodiment of the foregoing embodiment, information corresponding to a codepoint in the first field is configured by higher-layer signaling.

As a sub-embodiment of the foregoing embodiment, correspondence between the N1 codepoints of the first field and the N1 TCI state groups is configured by higher-layer signaling.

As an embodiment, "a time-domain resource occupied by the first time-frequency RB is used for determining the first moment" means that: the first moment is a moment at least a first interval value after the last symbol of the first time-frequency RB.

As an embodiment, "a time-domain resource occupied by the first time-frequency RB is used for determining the first moment" means that: the first moment is a start moment of a first slot at least a first interval value after the last symbol of the first time-frequency RB.

As an embodiment, "a time-domain resource occupied by the first time-frequency RB is used for determining the first moment" means that: the first moment is a start moment of a first slot at least a first interval value after a slot to which the first time-frequency RB belongs in the time domain.

As an embodiment, "a time-domain resource occupied by the first time-frequency RB is used for determining the first moment" means that: the first moment is a start moment of a first slot at least a first interval value after the first symbol of the first time-frequency RB.

As an embodiment, "a time-domain resource occupied by the first time-frequency RB is used for determining the first moment" means that: the first moment is a moment at least a first interval value after an end moment of the first time-frequency RB.

As an embodiment, "a time-domain resource occupied by the first time-frequency RB is used for determining the first moment" means that: the first moment is a start moment of a first time unit at least a first interval value after an end moment of the first time-frequency RB.

As an embodiment, "a time-domain resource occupied by the first time-frequency RB is used for determining the first moment" means that: the first moment is a moment at least a first interval value after a start moment of the first time-frequency RB.

As an embodiment, "a time-domain resource occupied by the first time-frequency RB is used for determining the first moment" means that: the first moment is a start moment of a first time unit at least a first interval value after a start moment of the first time-frequency RB.

As an embodiment, "after a symbol" means: being later than the symbol in time; and "after a moment" means: being later than the moment in time.

As an embodiment, "after a symbol" means: being no earlier than the symbol in time; and "after a moment" means: being no earlier than the moment in time.

As an embodiment, one time unit is a slot.

As an embodiment, one time unit is a sub-slot.

As an embodiment, one time unit is a symbol.

As an embodiment, one time unit includes a positive integer number of consecutive symbols greater than 1.

As an embodiment, a quantity of symbols included in one time unit is configured by a higher-layer parameter.

As an embodiment, a unit of the first interval value is the time unit.

As an embodiment, the unit of the first interval value is slot.

As an embodiment, the unit of the first interval value is symbol.

As an embodiment, the unit of the first interval value is ms.

As an embodiment, the first interval value is a positive integer.

As an embodiment, the first interval value is a positive real number.

As an embodiment, the first interval value is fixed.

As an embodiment, the first interval value is configured by a higher-layer parameter.

As an embodiment, the first interval value is BeamAppTime_r17.

As an embodiment, the first interval value is configured by a higher-layer parameter beamAppTime-r17.

As an embodiment, the spatial characteristic of the first-type physical channel in the first time-domain resource set is different from the spatial characteristic of the first-type physical channel in the second time-domain resource set.

As an embodiment, the spatial characteristic of the first-type physical channel in the first time-domain resource pool is different from the spatial characteristic of the first-type physical channel in the second time-domain resource pool.

As an embodiment, whether the first reference signal resource is used for determining only one or both of the spatial characteristic of the first-type physical channel in the first time-domain resource set and the spatial characteristic of the first-type physical channel in the second time-domain resource set is related to whether a first condition is satisfied. When the first condition is satisfied, the first reference signal resource is used for determining only one of the spatial characteristic of the first-type physical channel in the first time-domain resource set and the spatial characteristic of the first-type physical channel in the second time-domain resource set. When the first condition is not satisfied, the first reference signal resource is used for determining the spatial characteristic of the first-type physical channel in the first time-domain resource set and the spatial characteristic of the first-type physical channel in the second time-domain resource set.

As an embodiment, when and only when the first condition is satisfied, the first reference signal resource is used for determining only one of the spatial characteristic of the first-type physical channel in the first time-domain resource set and the spatial characteristic of the first-type physical channel in the second time-domain resource set.

As an embodiment, when the first condition is not satisfied, the first reference signal resource is used for determining the spatial characteristic of the first-type physical channel in the first time-domain resource set and the spatial characteristic of the first-type physical channel in the second time-domain resource set.

As an embodiment, the first condition includes: receiving a higher-layer parameter to configure a first time-domain resource pool and a second time-domain resource pool, the first time-domain resource set belonging to the first time-domain resource pool, and the second time-domain resource set belonging to the second time-domain resource pool.

As an embodiment, the first condition includes: at least one symbol in the first time-domain resource set being configured as a first type, and any symbol in the second time-domain resource set being configured as a second type.

As an embodiment, the first condition includes: at least one symbol in the first time-domain resource set is configured as a first type, and any symbol in the second time-domain resource set is configured as a type other than the first type.

As an embodiment, the first condition includes: at least one symbol in the first time-domain resource pool being configured as a first type, any symbol in the second time-domain resource pool being configured as a second type, the first time-domain resource set belonging to the first time-domain resource pool, and the second time-domain resource set belonging to the second time-domain resource pool.

As an embodiment, the first condition includes: at least one symbol in the first time-domain resource pool being configured as a first type, any symbol in the second time-domain resource pool being configured as a type other than the first type, the first time-domain resource set belonging to the first time-domain resource pool, and the second time-domain resource set belonging to the second time-domain resource pool.

As an embodiment, the first condition includes: at least one symbol in the first time-domain resource set being configured with more than one link direction, and any symbol in the second time-domain resource set being configured with only one link direction.

As an embodiment, the first condition includes: the first time-domain resource set being configured as Full Duplex, and the second time-domain resource set being configured as Half Duplex.

As an embodiment, the first condition includes: the first time-domain resource set being configured as non-overlapping full duplex, and the second time-domain resource set being configured as half duplex.

As an embodiment, the first condition includes: the first time-domain resource set being configured as subband non-overlapping full duplex, and the second time-domain resource set being configured as half duplex.

As an embodiment, the first condition includes: a sender of the first signaling simultaneously receiving and transmitting a wireless signal on at least one symbol in the first time-domain resource set, and the sender of the first signaling only receiving a wireless signal or only transmitting a wireless signal on at least one symbol in the second time-domain resource set.

As an embodiment, the first condition includes: the first node simultaneously receiving and transmitting a wireless signal on at least one symbol in the first time-domain resource set, and the first node only receiving a wireless signal or only transmitting a wireless signal on at least one symbol in the second time-domain resource set.

As an embodiment, a range of the link direction includes at least one of UL, DL, Flexible, and SL.

As an embodiment, the range of the link direction includes at least one of UL and DL.

As an embodiment, the range of the link direction includes UL and DL.

As an embodiment, the range of the link direction includes UL, DL, and Flexible.

As an embodiment, "a given reference signal resource is used for determining a spatial characteristic of a given channel" includes: the given channel is a DL physical channel, the given reference signal resource is a DL reference signal resource, and a same spatial characteristic is used for receiving the given reference signal resource and receiving the given channel.

As an embodiment, "a given reference signal resource is used for determining a spatial characteristic of a given channel" includes: the given channel is a DL physical channel, the given reference signal resource is a DL reference signal resource, and a same spatial characteristic is used for transmitting the given reference signal resource and transmitting the given channel.

As an embodiment, "a given reference signal resource is used for determining a spatial characteristic of a given channel" includes: the given channel is a DL physical channel, the given reference signal resource is a UL reference signal resource, and a same spatial characteristic is used for transmitting the given reference signal resource and receiving the given channel.

As an embodiment, "a given reference signal resource is used for determining a spatial characteristic of a given channel" includes: the given channel is a DL physical channel, the given reference signal resource is a UL reference signal resource, and a same spatial characteristic is used for receiving the given reference signal resource and transmitting the given channel.

As an embodiment, "a given reference signal resource is used for determining a spatial characteristic of a given channel" includes: the given channel is a UL physical channel, the given reference signal resource is a DL reference signal resource, and a same spatial characteristic is used for receiving the given reference signal resource and transmitting the given channel.

As an embodiment, "a given reference signal resource is used for determining a spatial characteristic of a given channel" includes: the given channel is a UL physical channel, the given reference signal resource is a DL reference signal resource, and a same spatial characteristic is used for transmitting the given reference signal resource and receiving the given channel.

As an embodiment, "a given reference signal resource is used for determining a spatial characteristic of a given channel" includes: the given channel is a UL physical channel, the given reference signal resource is a UL reference signal resource, and a same spatial characteristic is used for transmitting the given reference signal resource and transmitting the given channel.

As an embodiment, "a given reference signal resource is used for determining a spatial characteristic of a given channel" includes: the given channel is a UL physical channel, the given reference signal resource is a UL reference signal resource, and a same spatial characteristic is used for receiving the given reference signal resource and receiving the given channel.

As an embodiment, "a given reference signal resource is used for determining a spatial characteristic of a given channel" includes: the given channel is a DL physical channel, the given reference signal resource is a DL reference signal resource, and the first node assumes that a same spatial characteristic is used for receiving the given reference signal resource and receiving the given channel.

As an embodiment, "a given reference signal resource is used for determining a spatial characteristic of a given channel" includes: the given channel is a DL physical channel, the given reference signal resource is a UL reference signal resource, and the first node assumes that a same spatial characteristic is used for transmitting the given reference signal resource and receiving the given channel.

As an embodiment, "a given reference signal resource is used for determining a spatial characteristic of a given channel" includes: the given channel is a UL physical channel, the given reference signal resource is a DL reference signal resource, and the first node assumes that a same spatial characteristic is used for receiving the given reference signal resource and transmitting the given channel.

As an embodiment, "a given reference signal resource is used for determining a spatial characteristic of a given channel" includes: the given channel is a UL physical channel, the given reference signal resource is a DL reference signal resource, and the first node assumes that a same spatial characteristic is used for transmitting the given reference signal resource and receiving the given channel.

As an embodiment, "a given reference signal resource is used for determining a spatial characteristic of a given channel" includes: the given channel is a UL physical channel, the given reference signal resource is a UL reference signal resource, and the first node assumes that a same spatial characteristic is used for transmitting the given reference signal resource and transmitting the given channel.

As an embodiment, the given reference signal resource is the first reference signal resource, the given channel is the first-type physical channel in the first time-domain resource set, or the given channel is the first-type physical channel in the second time-domain resource set.

As an embodiment, the given reference signal resource is the first reference signal resource, and the given channel is any type of physical channel in the target channel group.

As an embodiment, the given reference signal resource is a second reference signal resource, and the given channel is the first-type physical channel in the second time-domain resource set.

As an embodiment, the given reference signal resource is a third reference signal resource, and the given channel is the first-type physical channel in the first time-domain resource set.

As an embodiment, the given reference signal resource is a fourth reference signal resource, and the given channel is the first-type physical channel in a time-domain resource earlier than the first moment in the first time-domain resource pool.

As an embodiment, the given reference signal resource is a fifth reference signal resource, and the given channel is the first-type physical channel in a time-domain resource earlier than the first moment in the second time-domain resource pool.

As an embodiment, the spatial characteristic in this application includes a QCL parameter.

As an embodiment, the spatial characteristic in this application includes a spatial filter.

As an embodiment, the spatial characteristic in this application includes a spatial domain filter.

As an embodiment, the spatial characteristic in this application includes a spatial relation.

As an embodiment, the spatial characteristic in this application includes precoding.

As an embodiment, the spatial characteristic in this application includes a beam.

As an embodiment, the spatial characteristic in this application includes beamforming.

As an embodiment, the spatial characteristic in this application includes one or more of a QCL parameter, a spatial filter, a transmit spatial filter, a receive spatial filter, a spatial domain filter, a spatial domain transmit filter, a spatial domain receive filter, a spatial relation, precoding, a beam, and beamforming.

As an embodiment, the UL reference signal resource includes an SRS resource.

As an embodiment, the UL reference signal resource includes at least one of an SRS resource and a UL DMRS.

As an embodiment, the DL reference signal resource includes at least one of a CSI-RS resource and an SS/PBCH block resource.

As an embodiment, the DL reference signal resource includes a CSI-RS resource.

As an embodiment, a control channel on a control channel candidate is a PSCCH.

As an embodiment, a control channel on a control channel candidate is a PDCCH.

As an embodiment, a control channel candidate is a PDCCH candidate, and a control channel on a control channel candidate is a PDCCH.

As an embodiment, a control channel candidate is a PSCCH candidate, and a control channel on a control channel candidate is a PSCCH.

As an embodiment, a control channel candidate is a monitored PDCCH candidate.

As an embodiment, a control channel candidate occupies a plurality of resource elements (REs).

As an embodiment, a control channel candidate occupies one or more control channel elements (CCEs).

As an embodiment, a quantity of CCEs occupied by a control channel candidate is equal to one of 1, 2, 4, 8, and 16.

As an embodiment, one CCE includes 9 Resource Element Groups (REGs), and one REG includes 4 REs.

As an embodiment, one CCE includes 6 REGs, and one REG includes 12 REs.

As an embodiment, for a specific definition of the PDCCH candidate, refer to 3GPP TS38.213, chapter 10.

As an embodiment, a CORESET includes a plurality of REs.

As an embodiment, a CORESET includes at least one CCE.

As an embodiment, one CORESET is configured by an Information Element (IE) ControlResourceSet.

As an embodiment, for a specific definition of the CORESET, refer to 3GPP TS38.213, chapter 10.

As an embodiment, for a specific definition of the IE ControlResourceSet, refer to 3GPP TS38.331, chapter 6.3.2.

As an embodiment, a control channel candidate in a CORESET belongs to the CORESET in the frequency domain.

As an embodiment, a control channel candidate in a CORESET is a control channel candidate in a search space set associated with the CORESET.

As an embodiment, a control channel candidate in a CORESET includes at least one CCE in the CORESET.

As an embodiment, any control channel candidate in a search space set associated with a CORESET includes at least one CCE of the CORESET.

As an embodiment, "a search space set associated with a CORESET" includes: a CORESET is used for determining a time-frequency resource occupied by a search space set associated with the CORESET in a Monitoring Occasion.

As an embodiment, "a search space set associated with a CORESET" includes: a CORESET includes a time-frequency resource occupied by a search space set associated with the CORESET in a Monitoring Occasion.

As an embodiment, "a search space set associated with a CORESET" includes: a RE occupied by a CORESET includes a RE occupied by a search space set associated with the CORESET in a Monitoring Occasion.

As an embodiment, "a search space set associated with a CORESET" includes: RB(s) occupied by a CORESET in the frequency domain includes/include RB(s) occupied by a search space set associated with the CORESET in the frequency domain.

As an embodiment, "a search space set associated with a CORESET" includes: a frequency-domain resources occupied by a CORESET includes a frequency-domain resource occupied by a search space set associated with the CORESET.

As an embodiment, "a search space set associated with a CORESET" includes: a symbol(s) occupied by a CORESET is/are used for determining a symbol(s) occupied by a search space set associated with the CORESET in a Monitoring Occasion.

As an embodiment, "a search space set associated with a CORESET" includes: a symbol(s) occupied by a CORESET includes a symbol(s) occupied by a search space set associated with the CORESET in a Monitoring Occasion.

As an embodiment, "a search space set associated with a CORESET" includes: configuration information of a search space set associated with a CORESET includes an index of the CORESET.

As an embodiment, a Monitoring Occasion includes a time period.

As an embodiment, a Monitoring Occasion includes at least one symbol.

As an embodiment, a Monitoring Occasion includes a slot.

As an embodiment, a Monitoring Occasion includes a sub-slot.

As an embodiment, a Monitoring Occasion includes a subframe.

### Embodiment 6

Embodiment 6 illustrates a schematic diagram of a first time-domain resource set and a second time-domain resource set according to an embodiment of this application, as shown in FIG. 6.

In Embodiment 6, the first time-domain resource set belongs to a first time-domain resource pool, and the second time-domain resource set belongs to a second time-domain resource pool; and the first time-domain resource set includes some or all time-domain resources in the first time-domain resource pool that are no earlier than the first moment, and the second time-domain resource set includes some or all time-domain resources in the second time-domain resource pool that are no earlier than the first moment.

As an embodiment, the first time-domain resource pool and the second time-domain resource pool are orthogonal to each other.

As an embodiment, the first time-domain resource pool includes a plurality of symbols in the time domain, and the second time-domain resource pool includes a plurality of symbols in the time domain.

As an embodiment, some time-domain resources in the first time-domain resource pool are earlier than the first moment, and some time-domain resources in the second time-domain resource pool are earlier than the first moment.

As an embodiment, the first time-domain resource set belongs to a first time-domain resource pool, and the second time-domain resource set belongs to a second time-domain resource pool; and at least one symbol in the first time-domain resource pool is configured with more than one link direction, and any symbol in the second time-domain resource pool is configured with only one link direction.

As an embodiment, the first time-domain resource set belongs to a first time-domain resource pool, and the second time-domain resource set belongs to a second time-domain resource pool; and at least one symbol in the first time-domain resource pool is configured with more than one link direction, and the second time-domain resource pool does not include a symbol configured with more than one link direction.

As an embodiment, at least one symbol in the first time-domain resource pool is configured as a first type, and any symbol in the second time-domain resource pool is configured as a second type.

As an embodiment, at least one symbol in the first time-domain resource pool is configured as a first type, and any symbol in the second time-domain resource pool is configured as a type other than the first type.

As an embodiment, a sender of the first signaling simultaneously receives and transmits a wireless signal on at least one symbol in the first time-domain resource pool, and the sender of the first signaling only receives a wireless signal or only transmits a wireless signal on at least one symbol in the second time-domain resource pool.

As an embodiment, the first node simultaneously receives and transmits a wireless signal on at least one symbol in the first time-domain resource pool, and the first node only receives a wireless signal or only transmits a wireless signal on at least one symbol in the second time-domain resource pool.

### Embodiment 7

Embodiment 7 illustrates a schematic diagram of a first time-domain resource set and a second time-domain resource set according to another embodiment of this application, as shown in FIG. 7.

In Embodiment 7, at least one symbol in the first time-domain resource set is configured as a first type, and any symbol in the second time-domain resource set is configured as a type other than the first type.

As an embodiment, at least one symbol in the first time-domain resource set is configured as a first type, and any symbol in the second time-domain resource set is configured as a second type.

As an embodiment, at least one symbol in the first time-domain resource set is configured as a first type.

As an embodiment, at least one symbol in the first time-domain resource set is configured as a second type.

As an embodiment, at least one symbol in the first time-domain resource set is configured as a type other than the first type.

As an embodiment, the first time-domain resource set includes a symbol configured as a second type.

As an embodiment, the first time-domain resource set includes a symbol configured as a type other than the first type.

As an embodiment, the first type is Flexible, and the type other than the first type is UL or DL.

As an embodiment, the first type is different from UL, DL, and Flexible, and the type other than the first type is UL, DL, or Flexible.

As an embodiment, the first type is different from UL, DL, and Flexible, and the type other than the first type is UL or DL.

As an embodiment, the first type is different from UL and DL, and the type other than the first type is UL or DL.

As an embodiment, the first type is different from UL and DL, and the type other than the first type is UL, DL, or Flexible.

As an embodiment, the first type includes a plurality of link directions, and the type other than the first type includes only one link direction.

As an embodiment, the type other than the first type is UL or DL.

As an embodiment, the type other than the first type is one of UL, DL, and Flexible.

As an embodiment, the first type is Flexible, and the second type is UL or DL.

As an embodiment, the first type is different from UL, DL, and Flexible, and the second type is UL, DL, or Flexible.

As an embodiment, the first type is different from UL, DL, and Flexible, and the second type is UL or DL.

As an embodiment, the first type is different from UL and DL, and the second type is UL or DL.

As an embodiment, the first type is different from UL and DL, and the second type is UL, DL, or Flexible.

As an embodiment, the first type includes a plurality of link directions, and the second type includes only one link direction.

As an embodiment, the first type is different from UL and DL.

As an embodiment, the first type is different from UL, DL, and Flexible.

As an embodiment, the second type is UL or DL.

As an embodiment, the second type is one of UL, DL, and Flexible.

As an embodiment, if one symbol is configured as the first type, the sender of the first signaling simultaneously receives and transmits a wireless signal on the symbol; and if one symbol is configured as a type other than the first type, the sender of the first signaling only receives a wireless signal or only transmits a wireless signal on the symbol.

As an embodiment, if one symbol is configured as the first type, the first node simultaneously receives and transmits a wireless signal on the symbol; and if one symbol is configured as a type other than the first type, the first node only receives a wireless signal or only transmits a wireless signal on the symbol.

As an embodiment, if one symbol is configured as the first type, the sender of the first signaling simultaneously receives and transmits a wireless signal on the symbol; and if one symbol is not configured as the first type, the sender of the first signaling only receives a wireless signal or only transmits a wireless signal on the symbol.

As an embodiment, if one symbol is configured as the first type, the first node simultaneously receives and transmits a wireless signal on the symbol; and if one symbol is not configured as the first type, the first node only receives a wireless signal or only transmits a wireless signal on the symbol.

As an embodiment, the first type is a type in a first type set, any symbol is configured as a type in the first type set, and the first type set includes the first type, UL, and DL.

As a sub-embodiment of the foregoing embodiment, the type other than the first type is a type in the first type set.

As a sub-embodiment of the foregoing embodiment, any two types in the first type set are different.

As a sub-embodiment of the foregoing embodiment, the first type set further includes a type other than the first type, UL, and DL.

As a sub-embodiment of the foregoing embodiment, Flexible is a type in the first type set.

As a sub-embodiment of the foregoing embodiment, Flexible is not a type in the first type set.

As a sub-embodiment of the foregoing embodiment, the first type is Flexible.

As a sub-embodiment of the foregoing embodiment, the first type is different from UL, DL, and Flexible.

As a sub-embodiment of the foregoing embodiment, the second type is a type in the first type set.

### Embodiment 8

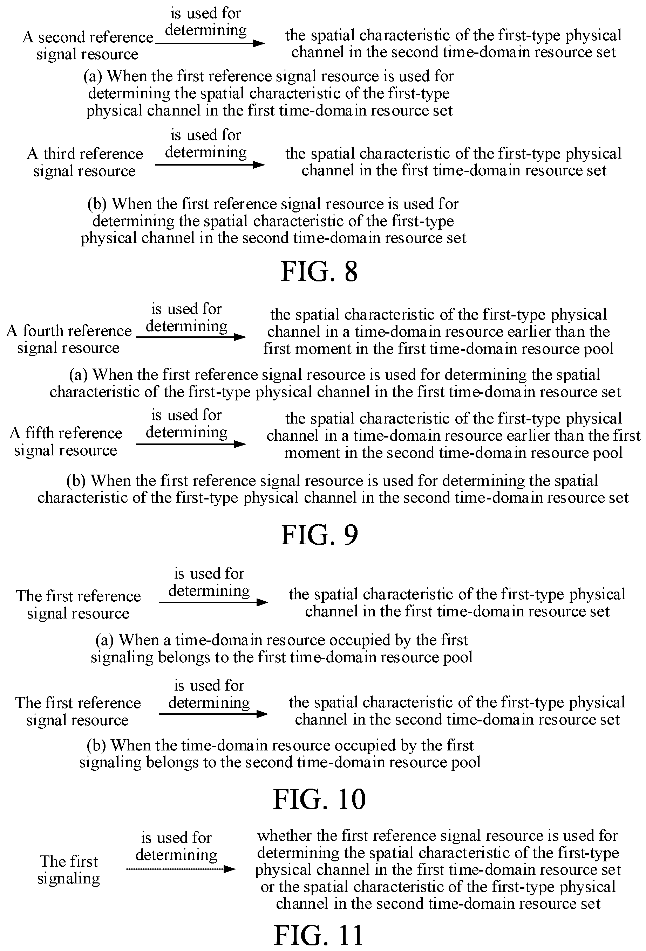

Embodiment 8 illustrates a schematic diagram of a spatial characteristic of a first-type physical channel according to an embodiment of this application, as shown in FIG. 8.

In Embodiment 8, when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

As an embodiment, the second reference signal resource is the same as the third reference signal resource.

As an embodiment, the second reference signal resource is different from the third reference signal resource.

As an embodiment, the second reference signal resource is a UL reference signal resource.

As an embodiment, the second reference signal resource is a DL reference signal resource.

As an embodiment, the second reference signal resource includes at least one of an SRS resource, a CSI-RS resource and an SS/PBCH block resource.

As an embodiment, the second reference signal resource includes at least one of a CSI-RS resource and an SS/PBCH block resource.

As an embodiment, the third reference signal resource is a UL reference signal resource.

As an embodiment, the third reference signal resource is a DL reference signal resource.

As an embodiment, the third reference signal resource includes at least one of an SRS resource, a CSI-RS resource and an SS/PBCH block resource.

As an embodiment, the third reference signal resource includes at least one of a CSI-RS resource and an SS/PBCH block resource.

### Embodiment 9

Embodiment 9 illustrates a schematic diagram of a spatial characteristic of a first-type physical channel according to another embodiment of this application, as shown in FIG. 9.

In Embodiment 9, the first time-domain resource set belongs to a first time-domain resource pool, and the second time-domain resource set belongs to a second time-domain resource pool; and when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

As an embodiment, the fourth reference signal resource is a UL reference signal resource.

As an embodiment, the fourth reference signal resource is a DL reference signal resource.

As an embodiment, the fourth reference signal resource includes at least one of an SRS resource, a CSI-RS resource and an SS/PBCH block resource.

As an embodiment, the fourth reference signal resource includes at least one of a CSI-RS resource and an SS/PBCH block resource.

As an embodiment, the fifth reference signal resource is a UL reference signal resource.

As an embodiment, the fifth reference signal resource is a DL reference signal resource.

As an embodiment, the fifth reference signal resource includes at least one of an SRS resource, a CSI-RS resource and an SS/PBCH block resource.

As an embodiment, the fifth reference signal resource includes at least one of a CSI-RS resource and an SS/PBCH block resource.

As an embodiment, the fourth reference signal resource is different from the fifth reference signal resource.

As an embodiment, when the first reference signal resource is used for determining the spatial characteristic of the first-type physical channel in the first time-domain resource set, a second reference signal resource is used for determining the spatial characteristic of the first-type physical channel in a time-domain resource earlier than the first moment in the second time-domain resource pool.

As an embodiment, when the first reference signal resource is used for determining the spatial characteristic of the first-type physical channel in the first time-domain resource set, a fifth reference signal resource is used for determining the spatial characteristic of the first-type physical channel in a time-domain resource earlier than the first moment in the second time-domain resource pool.

As an embodiment, when the first reference signal resource is used for determining the spatial characteristic of the first-type physical channel in the second time-domain resource set, a third reference signal resource is used for determining the spatial characteristic of the first-type physical channel in a time-domain resource earlier than the first moment in the first time-domain resource pool.

As an embodiment, when the first reference signal resource is used for determining the spatial characteristic of the first-type physical channel in the second time-domain resource set, a fourth reference signal resource is used for determining the spatial characteristic of the first-type physical channel in a time-domain resource earlier than the first moment in the first time-domain resource pool.

### Embodiment 10

Embodiment 10 illustrates a schematic diagram of determining whether a first reference signal resource corresponds to a first time-domain resource set or a second time-domain resource set according to an embodiment of this application, as shown in FIG. 10.

In Embodiment 10, the first time-domain resource set belongs to a first time-domain resource pool, and the second time-domain resource set belongs to a second time-domain resource pool; and when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

### Embodiment 11

Embodiment 11 illustrates a schematic diagram of determining whether a first reference signal resource corresponds to a first time-domain resource set or a second time-domain resource set according to another embodiment of this application, as shown in FIG. 11.

In Embodiment 11, the first signaling is used for determining whether the first reference signal resource is used for determining the spatial characteristic of the first-type physical channel in the first time-domain resource set or the spatial characteristic of the first-type physical channel in the second time-domain resource set.

As an embodiment, the first signaling is used for indicating whether the first reference signal resource is used for determining the spatial characteristic of the first-type physical channel in the first time-domain resource set or the spatial characteristic of the first-type physical channel in the second time-domain resource set.

As an embodiment, the first signaling explicitly indicates whether the first reference signal resource is used for determining the spatial characteristic of the first-type physical channel in the first time-domain resource set or the spatial characteristic of the first-type physical channel in the second time-domain resource set.

As an embodiment, the first signaling implicitly indicates whether the first reference signal resource is used for determining the spatial characteristic of the first-type physical channel in the first time-domain resource set or the spatial characteristic of the first-type physical channel in the second time-domain resource set.

As an embodiment, a DCI format of the first signaling is used for determining whether the first reference signal resource is used for determining the spatial characteristic of the first-type physical channel in the first time-domain resource set or the spatial characteristic of the first-type physical channel in the second time-domain resource set.

As a sub-embodiment of the foregoing embodiment, when the DCI format of the first signaling belongs to a first DCI format set, the first reference signal resource is used for determining the spatial characteristic of the first-type physical channel in the first time-domain resource set; and when the DCI format of the first signaling belongs to a second DCI format set, the first reference signal resource is used for determining the spatial characteristic of the first-type physical channel in the second time-domain resource set; where the first DCI format set is different from the second DCI format set.

As an embodiment, a Radio Network Temporary Identifier (RNTI) used for scrambling Cyclic Redundancy Check (CRC) of the first signaling is used for determining whether the first reference signal resource is used for determining the spatial characteristic of the first-type physical channel in the first time-domain resource set or the spatial characteristic of the first-type physical channel in the second time-domain resource set.

As a sub-embodiment of the foregoing embodiment, when the RNTI used for scrambling the CRC of the first signaling belongs to a first RNTI set, the first reference signal resource is used for determining the spatial characteristic of the first-type physical channel in the first time-domain resource set; and when the RNTI used for scrambling the CRC of the first signaling belongs to a second RNTI set, the first reference signal resource is used for determining the spatial characteristic of the first-type physical channel in the second time-domain resource set; where the first RNTI set is different from the second RNTI set.

As an embodiment, a time-domain resource occupied by the first signaling is used for determining whether the first reference signal resource is used for determining the spatial characteristic of the first-type physical channel in the first time-domain resource set or the spatial characteristic of the first-type physical channel in the second time-domain resource set.

### Embodiment 12

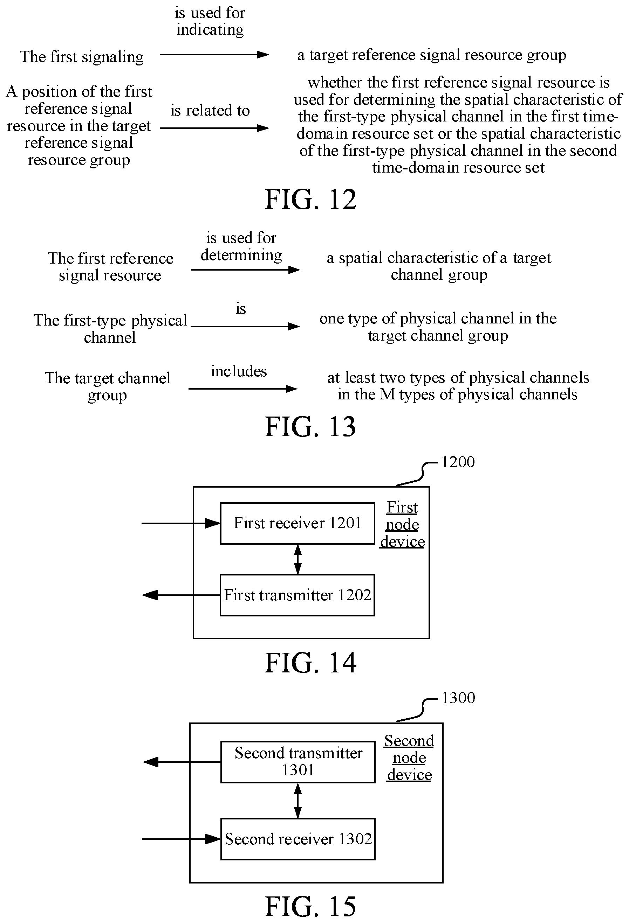

Embodiment 12 illustrates a schematic diagram of determining whether a first reference signal resource corresponds to a first time-domain resource set or a second time-domain resource set according to another embodiment of this application, as shown in FIG. 12.

In Embodiment 12, the first signaling is used for indicating a target reference signal resource group, the target reference signal resource group includes two reference signal resources, and the first reference signal resource is one of the two reference signal resources in the target reference signal resource group; the two reference signal resources in the target reference signal resource group are respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

As an embodiment, the two reference signal resources in the target reference signal resource group are respectively the first reference signal resource and the second reference signal resource.

As an embodiment, the two reference signal resources in the target reference signal resource group are respectively the first reference signal resource and the second reference signal resource, and the first reference signal resource is the same as the second reference resource.

As a sub-embodiment of the foregoing embodiment, a fourth reference signal resource is used for determining the spatial characteristic of the first-type physical channel in a time-domain resource earlier than the first moment in the first time-domain resource pool, a fifth reference signal resource is used for determining the spatial characteristic of the first-type physical channel in a time-domain resource earlier than the first moment in the second time-domain resource pool, and at least one of the first reference signal resource and the second reference signal resource is different from at least one of the fourth reference signal resource and the fifth reference signal resource.

As an embodiment, any reference signal resource in the target reference signal resource group is one of an SRS resource, a CSI-RS resource, and an SS/PBCH block resource.

As an embodiment, any reference signal resource in the target reference signal resource group is a CSI-RS resource or an SS/PBCH block resource.

As an embodiment, any reference signal resource in the target reference signal resource group corresponds to a QCL parameter whose type is TypeD.

As an embodiment, the two reference signal resources in the target reference signal resource group both correspond to a QCL parameter whose type is TypeD.

As an embodiment, QCL parameters respectively corresponding to the two reference signal resources in the target reference signal resource group are of a same type.

As an embodiment, the first signaling explicitly indicates the target reference signal resource group.

As an embodiment, the first signaling implicitly indicates the target reference signal resource group.

As an embodiment, the first signaling is used for indicating a first TCI state group, the first TCI state group includes two TCI states, and the two reference signal resources in the target reference signal resource group are respectively included in the two TCI states in the first TCI state group.

As a sub-embodiment of the foregoing embodiment, at least one field in the first signaling is used for indicating the first TCI state group; and one field includes at least one bit.

As a sub-embodiment of the foregoing embodiment, the first signaling includes a first field, and the first field in the first signaling is used for indicating the first TCI state group; and the first field includes at least one bit.

As a sub-embodiment of the foregoing embodiment, the first signaling includes a plurality of fields, and the plurality of fields in the first signaling are jointly used for indicating the first TCI state group; and one field includes at least one bit.

As an embodiment, the first signaling includes a first field, and the first field in the first signaling is used for indicating the target reference signal resource group.

As an embodiment, at least one field in the first signaling is used for indicating the target reference signal resource group.

As an embodiment, the first signaling includes a plurality of fields, and the plurality of fields in the first signaling are jointly used for indicating the target reference signal resource group.

As an embodiment, a position of the first reference signal resource in the target reference signal resource group is an ordinal position of the first reference signal resource in the target reference signal resource group.

As an embodiment, a position of the first reference signal resource in the target reference signal resource group is a sequential position of the first reference signal resource in the target reference signal resource group.

As an embodiment, the first reference signal resource is a kth reference signal resource in the target reference signal resource group, and the position of the first reference signal resource in the target reference signal resource group is the k.

As an embodiment, when the first reference signal resource is a first reference signal resource in the target reference signal resource group, the first reference signal resource is used for determining the spatial characteristic of the first-type physical channel in the first time-domain resource set; and when the first reference signal resource is a second reference signal resource in the target reference signal resource group, the first reference signal resource is used for determining the spatial characteristic of the first-type physical channel in the second time-domain resource set.

As an embodiment, when the first reference signal resource is a first reference signal resource in the target reference signal resource group, the first reference signal resource is used for determining the spatial characteristic of the first-type physical channel in the second time-domain resource set; and when the first reference signal resource is a second reference signal resource in the target reference signal resource group, the first reference signal resource is used for determining the spatial characteristic of the first-type physical channel in the first time-domain resource set.

As an embodiment, when the position of the first reference signal resource in the target reference signal resource group is a first position, the first reference signal resource is used for determining the spatial characteristic of the first-type physical channel in the first time-domain resource set; and when the position of the first reference signal resource in the target reference signal resource group is a second position, the first reference signal resource is used for determining the spatial characteristic of the first-type physical channel in the second time-domain resource set.

As a sub-embodiment of the foregoing embodiment, the first position is ranked before the second position.

As a sub-embodiment of the foregoing embodiment, the first position is ranked after the second position.

As a sub-embodiment of the foregoing embodiment, when the first reference signal resource is the first reference signal resource in the target reference signal resource group, the position of the first reference signal resource in the target reference signal resource group is the first position; and when the first reference signal resource is the second reference signal resource in the target reference signal resource group, the position of the first reference signal resource in the target reference signal resource group is the second position.

As a sub-embodiment of the foregoing embodiment, when the first reference signal resource is the second reference signal resource in the target reference signal resource group, the position of the first reference signal resource in the target reference signal resource group is the first position; and when the first reference signal resource is the first reference signal resource in the target reference signal resource group, the position of the first reference signal resource in the target reference signal resource group is the second position.

### Embodiment 13

Embodiment 13 illustrates a schematic diagram of a target channel group according to an embodiment of this application, as shown in FIG. 13.

In Embodiment 13, the first-type physical channel is one of M types of physical channels, M being a positive integer greater than 1; and starting from the first moment, the first reference signal resource is used for determining a spatial characteristic of a target channel group, the target channel group including at least two types of physical channels in the M types of physical channels, and the first-type physical channel is one type of physical channel in the target channel group.

As an embodiment, the M types of physical channels include a PDCCH and a PDSCH, and the target channel group includes the PDCCH and the PDSCH.

As an embodiment, the M types of physical channels include a PUCCH and a PUSCH, and the target channel group includes the PUCCH and the PUSCH.

As an embodiment, the UL physical channel includes a PDCCH, a PDSCH, a PUCCH, and a PUSCH.

As a sub-embodiment of the foregoing embodiment, the target channel group includes the PDCCH and the PDSCH.

As a sub-embodiment of the foregoing embodiment, the target channel group includes the PUCCH and the PUSCH.

As a sub-embodiment of the foregoing embodiment, the target channel group includes the PDCCH, the PDSCH, the PUCCH, and the PUSCH.

As an embodiment, link directions of different types of physical channels in the target channel group are the same.

As an embodiment, link directions of two types of physical channels in the target channel group are different.

As an embodiment, the target channel group is related to whether the first reference signal resource is used for determining the spatial characteristic of the first-type physical channel in the first time-domain resource set or the spatial characteristic of the first-type physical channel in the second time-domain resource set.

As an embodiment, when the first reference signal resource is used for determining the spatial characteristic of the first-type physical channel in the first time-domain resource set, link directions of two types of physical channels in the target channel group are different; and when the first reference signal resource is used for determining the spatial characteristic of the first-type physical channel in the second time-domain resource set, link directions of different types of physical channels in the target channel group are the same.

As an embodiment, when the first reference signal resource is used for determining the spatial characteristic of the first-type physical channel in the first time-domain resource set, the target channel group includes at least one of a PDCCH and a PDSCH and at least one of a PUCCH and a PUSCH; and when the first reference signal resource is used for determining the spatial characteristic of the first-type physical channel in the second time-domain resource set, the target channel group includes a PDCCH and a PDSCH or the target channel group includes a PUCCH and a PUSCH.

### Embodiment 14

Embodiment 14 illustrates a structural block diagram of a processing apparatus used in a first node device according to an embodiment of this application, as shown in FIG. 14. In FIG. 14, the processing apparatus 1200 in the first node device includes at least a first receiver 1201 of the first receiver 1201 and a first transmitter 1202, and the first transmitter 1202 is optional.

As an embodiment, the first node device is a UE.

As an embodiment, the first node device is a relay node device.

As an embodiment, the first receiver 1201 includes at least one of {the antenna 452, the receiver 454, the receiving processor 456, the multi-antenna receiving processor 458, the controller/processor 459, the memory 460, and the data source 467} in Embodiment 4.

As an embodiment, the first transmitter 1202 includes at least one of {the antenna 452, the transmitter 454, the transmitting processor 468, the multi-antenna transmitting processor 457, the controller/processor 459, the memory 460, and the data source 467} in Embodiment 4.

The first receiver 1201 receives first signaling; and
the first transmitter 1202 transmits a first information block in a first time-frequency RB.

In Embodiment 14, the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, at least one symbol in the first time-domain resource set is configured as a first type, and any symbol in the second time-domain resource set is configured as a type other than the first type.

As an embodiment, when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

As an embodiment, the first time-domain resource set belongs to a first time-domain resource pool, and the second time-domain resource set belongs to a second time-domain resource pool; and when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

As an embodiment, the first time-domain resource set belongs to a first time-domain resource pool, and the second time-domain resource set belongs to a second time-domain resource pool; and when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

As an embodiment, the first signaling is used for indicating a target reference signal resource group, the target reference signal resource group includes two reference signal resources, and the first reference signal resource is one of the two reference signal resources in the target reference signal resource group; the two reference signal resources in the target reference signal resource group are respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

As an embodiment, the first-type physical channel is one of M types of physical channels, M being a positive integer greater than 1; and starting from the first moment, the first reference signal resource is used for determining a spatial characteristic of a target channel group, the target channel group including at least two types of physical channels in the M types of physical channels, and the first-type physical channel is one type of physical channel in the target channel group.

### Embodiment 15

Embodiment 15 illustrates a structural block diagram of a processing apparatus used in a second node device according to an embodiment of this application, as shown in FIG. 15. In FIG. 15, the processing apparatus 1300 in the second node device includes at least a second transmitter 1301 of the second transmitter 1301 and a second receiver 1302, and the second receiver 1302 is optional.

As an embodiment, the second node device is a base station device.

As an embodiment, the second node device is a UE.

As an embodiment, the second node device is a relay node device.

As an embodiment, the second transmitter 1301 includes at least one of {the antenna 420, the transmitter 418, the transmitting processor 416, the multi-antenna transmitting processor 471, the controller/processor 475, and the memory 476} in Embodiment 4.

As an embodiment, the second receiver 1302 includes at least one of {the antenna 420, the receiver 418, the receiving processor 470, the multi-antenna receiving processor 472, the controller/processor 475, and the memory 476} in Embodiment 4.

The second transmitter 1301 transmits first signaling; and
the second receiver 1302 receives a first information block in a first time-frequency RB.

In Embodiment 15, the first signaling is used for indicating the first time-frequency RB, and the first information block includes an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

As an embodiment, at least one symbol in the first time-domain resource set is configured as a first type, and any symbol in the second time-domain resource set is configured as a type other than the first type.

As an embodiment, when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

As an embodiment, the first time-domain resource set belongs to a first time-domain resource pool, and the second time-domain resource set belongs to a second time-domain resource pool; and when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

As an embodiment, the first time-domain resource set belongs to a first time-domain resource pool, and the second time-domain resource set belongs to a second time-domain resource pool; and when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

As an embodiment, the first signaling is used for indicating a target reference signal resource group, the target reference signal resource group includes two reference signal resources, and the first reference signal resource is one of the two reference signal resources in the target reference signal resource group; the two reference signal resources in the target reference signal resource group are respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

As an embodiment, the first-type physical channel is one of M types of physical channels, M being a positive integer greater than 1; and starting from the first moment, the first reference signal resource is used for determining a spatial characteristic of a target channel group, the target channel group including at least two types of physical channels in the M types of physical channels, and the first-type physical channel is one type of physical channel in the target channel group.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the module units in the foregoing embodiments may be implemented in a form of hardware or may be implemented in a form of a software functional module. This application is not limited to a combination of software and hardware in any particular form. The terminal and the UE in this application include, but are not limited to, wireless communication devices such as unmanned aerial vehicles, communication modules on unmanned aerial vehicles, telecontrolled aircrafts, aircrafts, diminutive aeroplanes, mobile phones, tablet computers, notebook computers, vehicle-mounted communication devices, wireless sensors, network cards, Internet of things terminals, radio frequency identification (RFID) terminals, narrow band Internet of things (NB-IOT) terminals, Machine Type Communication (MTC) terminals, enhanced MTC (eMTC) terminals, data cards, network cards, vehicle-mounted communication devices, low-cost mobile phones, and low-cost tablet computers. The base station or system device in this application includes, but is not limited to, wireless communication devices such as a macrocellular base station, a microcellular base station, a home base station, a relay base station, a gNB (an NR node B), and a Transmitter Receiver Point (TRP).

The above are merely preferred embodiments of this application and is not intended to limit the protection scope of this application. Any changes and modifications made based on the embodiments described in this specification should be considered as obvious and fall within the protection scope of the present invention if similar partial or complete technical effects can be achieved.

## Claims

1. A first node device used for wireless communication, comprising:
a first receiver receiving first signaling; and
a first transmitter transmitting a first information block in a first time-frequency resource block (RB);
wherein the first signaling is used for indicating the first time-frequency RB, and the first information block comprises a Hybrid Automatic Repeat reQuest-ACKnowledge (HARQ-ACK) related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

2. The first node device according to claim 1, wherein at least one symbol in the first time-domain resource set is configured as a first type, and any symbol in the second time-domain resource set is configured as a type other than the first type.

3. The first node device according to claim 1 or 2, wherein when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

4. The first node device according to any one of claims 1 to 3, wherein the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

5. The first node device according to any one of claims 1 to 4, wherein the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

6. The first node device according to any one of claims 1 to 4, wherein the first signaling is used for indicating a target reference signal resource group, the target reference signal resource group comprising two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

7. The first node device according to any one of claims 1 to 6, wherein the first-type physical channel is one of M types of physical channels, M being a positive integer greater than 1; and starting from the first moment, the first reference signal resource is used for determining a spatial characteristic of a target channel group, the target channel group comprising at least two types of physical channels in the M types of physical channels, and the first-type physical channel is one type of physical channel in the target channel group.

8. A second node device used for wireless communication, comprising:
a second transmitter transmitting first signaling; and
a second receiver receiving a first information block in a first time-frequency RB;
wherein the first signaling is used for indicating the first time-frequency RB, and the first information block comprises an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

9. The second node device according to claim 8, wherein at least one symbol in the first time-domain resource set is configured as a first type, and any symbol in the second time-domain resource set is configured as a type other than the first type.

10. The second node device according to claim 8 or 9, wherein when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

11. The second node device according to any one of claims 8 to 10, wherein the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

12. The second node device according to any one of claims 8 to 11, wherein the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

13. The second node device according to any one of claims 8 to 11, wherein the first signaling is used for indicating a target reference signal resource group, the target reference signal resource group comprising two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

14. The second node device according to any one of claims 8 to 13, wherein the first-type physical channel is one of M types of physical channels, M being a positive integer greater than 1; and starting from the first moment, the first reference signal resource is used for determining a spatial characteristic of a target channel group, the target channel group comprising at least two types of physical channels in the M types of physical channels, and the first-type physical channel is one type of physical channel in the target channel group.

15. A method in a first node used for wireless communication, comprising:
receiving first signaling; and
transmitting a first information block in a first time-frequency RB;
wherein the first signaling is used for indicating the first time-frequency RB, and the first information block comprises an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

16. The method according to claim 15, wherein at least one symbol in the first time-domain resource set is configured as a first type, and any symbol in the second time-domain resource set is configured as a type other than the first type.

17. The method according to claim 15 or 16, wherein when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

18. The method according to any one of claims 15 to 17, wherein the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

19. The method according to any one of claims 15 to 18, wherein the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

20. The method according to any one of claims 15 to 18, wherein the first signaling is used for indicating a target reference signal resource group, the target reference signal resource group comprising two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

21. The method according to any one of claims 15 to 20, wherein the first-type physical channel is one of M types of physical channels, M being a positive integer greater than 1; and starting from the first moment, the first reference signal resource is used for determining a spatial characteristic of a target channel group, the target channel group comprising at least two types of physical channels in the M types of physical channels, and the first-type physical channel is one type of physical channel in the target channel group.

22. A method in a second node used for wireless communication, comprising:
transmitting first signaling; and
receiving a first information block in a first time-frequency RB;
wherein the first signaling is used for indicating the first time-frequency RB, and the first information block comprises an HARQ-ACK related to the first signaling; the first signaling is used for indicating a first reference signal resource; starting from a first moment, the first reference signal resource is used for determining only one of a spatial characteristic of a first-type physical channel in a first time-domain resource set and a spatial characteristic of the first-type physical channel in a second time-domain resource set; a time-domain resource occupied by the first time-frequency RB is used for determining the first moment; and the first time-domain resource set and the second time-domain resource set are orthogonal to each other, and a start moment of the first time-domain resource set and a start moment of the second time-domain resource set are no earlier than the first moment.

23. The method according to claim 22, wherein at least one symbol in the first time-domain resource set is configured as a first type, and any symbol in the second time-domain resource set is configured as a type other than the first type.

24. The method according to claim 22 or 23, wherein when the first reference signal resource is used for determining the spatial characteristic of the first-type physical channel in the first time-domain resource set, a second reference signal resource is used for determining the spatial characteristic of the first-type physical channel in the second time-domain resource set, and the first reference signal resource is different from the second reference signal resource; and when the first reference signal resource is used for determining the spatial characteristic of the first-type physical channel in the second time-domain resource set, a third reference signal resource is used for determining the spatial characteristic of the first-type physical channel in the first time-domain resource set, and the first reference signal resource is different from the third reference signal resource.

25. The method according to any one of claims 22 to 24, wherein the first time-domain resource set belongs to a first time-domain resource pool, and the second time-domain resource set belongs to a second time-domain resource pool; when the first reference signal resource is used for determining the spatial characteristic of the first-type physical channel in the first time-domain resource set, a fourth reference signal resource is used for determining the spatial characteristic of the first-type physical channel in a time-domain resource earlier than the first moment in the first time-domain resource pool, and the first reference signal resource is different from the fourth reference signal resource; and when the first reference signal resource is used for determining the spatial characteristic of the first-type physical channel in the second time-domain resource set, a fifth reference signal resource is used for determining the spatial characteristic of the first-type physical channel in a time-domain resource earlier than the first moment in the second time-domain resource pool, and the first reference signal resource is different from the fifth reference signal resource.

26. The method according to any one of claims 22 to 25, wherein the first time-domain resource set belongs to a first time-domain resource pool, and the second time-domain resource set belongs to a second time-domain resource pool; when a time-domain resource occupied by the first signaling belongs to the first time-domain resource pool, the first reference signal resource is used for determining the spatial characteristic of the first-type physical channel in the first time-domain resource set; and when the time-domain resource occupied by the first signaling belongs to the second time-domain resource pool, the first reference signal resource is used for determining the spatial characteristic of the first-type physical channel in the second time-domain resource set.

27. The method according to any one of claims 22 to 25, wherein the first signaling is used for indicating a target reference signal resource group, the target reference signal resource group comprising two reference signal resources, and the first reference signal resource being one of the two reference signal resources in the target reference signal resource group; the two reference signal resources in the target reference signal resource group being respectively used for determining the spatial characteristic of the first-type physical channel in the first time-domain resource set and the spatial characteristic of the first-type physical channel in the second time-domain resource set; and whether the first reference signal resource is used for determining the spatial characteristic of the first-type physical channel in the first time-domain resource set or the spatial characteristic of the first-type physical channel in the second time-domain resource set is related to a position of the first reference signal resource in the target reference signal resource group.

28. The method according to any one of claims 22 to 27, wherein the first-type physical channel is one of M types of physical channels, M being a positive integer greater than 1; and starting from the first moment, the first reference signal resource is used for determining a spatial characteristic of a target channel group, the target channel group comprising at least two types of physical channels in the M types of physical channels, and the first-type physical channel is one type of physical channel in the target channel group.
